# DEMANDE DE BREVET EUROPEEN

(11) **EP 1 630 076 A1**
(43) Date de publication de la demande: **01.03.2006**
(21) Numéro de dépôt: 05300520.3
(22) Date de dépôt: 28.06.2005
(51) Int. Cl.: B62D 25/08

(54) **Structure avant de véhicule automobile**

(30) Priorité: 31.08.2004 FR 0451942
(71) Demandeur: Renault, 92109 Boulogne Billancourt (FR)
(72) Inventeur: Emeric, Elisabeth, 78000, VERSAILLES (FR)

(57) **Abrégé**

Structure avant de véhicule automobile, comportant un élément de support (2) du pare brise (4) qui est placé sous ce pare brise et qui est solidarisé à un élément structurel (8) du tablier (10) du véhicule, caractérisé en ce que l'extrémité avant du pare-brise et l'extrémité avant de l'élément de support associée est situé en avant de l'élément structurel du tablier et en ce qu'un élément de maintien (20) est placé sous l'extrémité avant de l'élément de support, cet élément de maintien étant d'autre part solidarisé à la structure du véhicule.

## Description

La présente invention concerne les structures de véhicules automobiles et plus particulièrement les structures avant de véhicule automobile, comportant un élément de support du pare brise qui est placé sous ce pare brise et qui est solidarisé à un élément structurel du véhicule.

Sur de nombreux véhicules, un élément de structure, nommé parfois structure sous baie, est placé sous le pare brise en avant de celui-ci, afin de supporter ce pare brise, tout en réalisant conjointement une prestation structurelle entre les deux doublures de pied. Cet élément doit apporter à la structure avant du véhicule des gains de raideur et des performances vibratoires. Ce type de structure sous baie peut être rapporté sur un élément du tablier et classiquement sur une traverse supérieure de tablier venant rigidifier celui-ci dans sa partie supérieure.

L'invention se situe dans un contexte de mise en place de pare brises panoramique sur les véhicules, c'est-à-dire des pares brises qui présentent des dimensions plus grandes qu'un pare brise classique, à la fois dans les dimensions latérales et longitudinales.

Un des objectifs de l'invention est donc de proposer une structure avant coopérant avec un pare brise panoramique, présentant des performances acoustiques et structurelles au moins aussi élevées que des structures classiques.

En réponse à des objectifs que l'on retrouve invariablement chez les différents constructeurs automobiles, la présente invention se veut également peu coûteuse et peu encombrante.

Pour répondre à ces objectifs, l'invention propose une structure avant tel que décrit précédemment, caractérisé en ce que l'extrémité avant du pare-brise et l'extrémité avant de l'élément de support associée est situé en avant de l'élément structurel du tablier et en ce qu'un élément de maintien est placé sous l'extrémité avant de l'élément de support, cet élément de maintien étant d'autre part solidarisé à la structure du véhicule.

Selon différentes caractéristiques de la présente invention :
- l'élément de maintien est fixé transversalement au centre de la partie centrale de l'élément de support, et en ce que la liaison entre cet élément de maintien et la structure du véhicule est réalisée transversalement sur au moins un côté du véhicule.
- l'élément de maintien présente une forme sensiblement symétrique en arche dans laquelle la partie supérieure centrale de l'élément de maintien s'étend sous une grande largeur de l'élément structurel, cette partie centrale étant prolongée de par et d'autre par des pieds présentant une inclinaison vers l'extérieur et le bas du véhicule, ces pieds étant liés chacun à un côté du véhicule.
- l'élément de maintien est formé de deux pièces sensiblement symétriques, chaque pièce étant fixée transversalement au centre de la partie centrale de l'élément de support, la liaison entre chaque pièce de l'élément de maintien et la structure du véhicule est réalisée transversalement sur un côté respectif du véhicule.
- l'élément de support et l'élément de maintien sont formés d'une unique pièce.
- l'élément de maintien est fixé latéralement sur les coupelles d'amortisseur du véhicule.
- l'élément de maintien est fixé latéralement sur des éléments longitudinaux de la structure avant du véhicule.

L'invention vise à protéger également un véhicule automobile comprenant une structure avant telle qu'évoquée ci-dessus.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'une structure avant classique de véhicule automobile
- la figure 2 est une vue de face d'une structure avant de véhicule automobile selon un premier mode de réalisation,
- la figure 3 est une vue de dessus de la structure représentée à la figure 2.

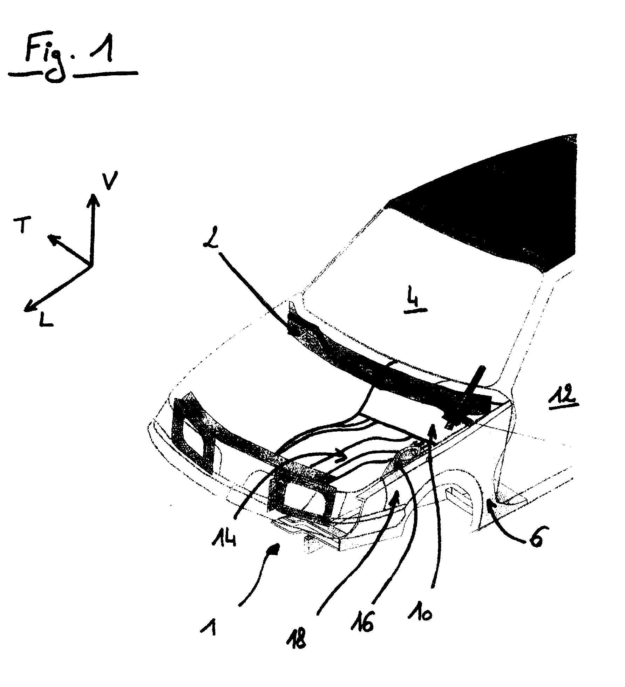

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Tel que représenté sur les figures 1 à 3, une structure avant 1 de véhicule automobile comporte au moins un premier élément structurel transversal 2 sur lequel repose le pare brise 4. Ce premier élément structurel, appelé couramment traverse sous baie 2, est solidaire, à ses extrémités, à des éléments structuraux latéraux 6 du véhicule, à savoir des pieds avant et des renforts de pieds avant. Cette traverse sous baie 2 est également solidaire d'un deuxième élément structurel 8, appelé couramment traverse supérieure de tablier. Ce deuxième élément structurel 8 est situé longitudinalement au niveau du tablier 10 qui sépare la structure avant 1 de l'habitacle 12, et est donc situé dans la partie arrière de la structure avant 1. D'autres éléments participent à la rigidité de la structure avant 1, et en premier lieu les longerons 14 qui s'étendent longitudinalement sensiblement depuis l'extrémité avant du véhicule et au moins jusqu'au tablier 10. Latéralement, correspondant à chaque passage de roue avant, une coupelle d'amortisseur 16 est solidarisée à la structure 1, et notamment à la doublure de pied avant 6, et participe ainsi à la tenue de la structure 1, outre ses fonctions propres relatives à l'amortisseur de la roue avant.

Dans le cadre d'un véhicule dont le pare brise 4 se veut panoramique, et étant donné les contraintes architecturales qui empêchent le véhicule de dépasser un certain empattement, l'extrémité avant du pare brise 4 et l'extrémité avant de la structure sous baie 2 associée sont situées très en avant de la traverse supérieure de tablier 8, en porte à faux. Afin de ne pas pénaliser le maintien et le support du pare brise 4, et de ne pas générer des vibrations gênantes pour les utilisateurs, un élément de maintien 20, prenant sensiblement la forme d'une arche, assure un soutien sous l'extrémité du premier élément structurel 2 et s'étend, selon l'exemple représenté, d'une coupelle d'amortisseur 16 à l'autre. Cette arche transversale 20 est située vers l'avant du véhicule par rapport à la traverse de tablier 8, et permet ainsi de maintenir la partie de la traverse sous baie 2 en porte à faux du tablier 10. Il sera compris que les extrémités 22 de l'arche peuvent être solidarisés à d'autres éléments structurels latéraux du véhicule sans que cela sorte du cadre de l'invention, dès lors que la combinaison de la position longitudinale des fixations de l'arche 20 sur ces éléments structurels et de la forme de l'arche 20 permet un maintien de l'extrémité de la traverse sous baie 2 en avant du tablier 10.

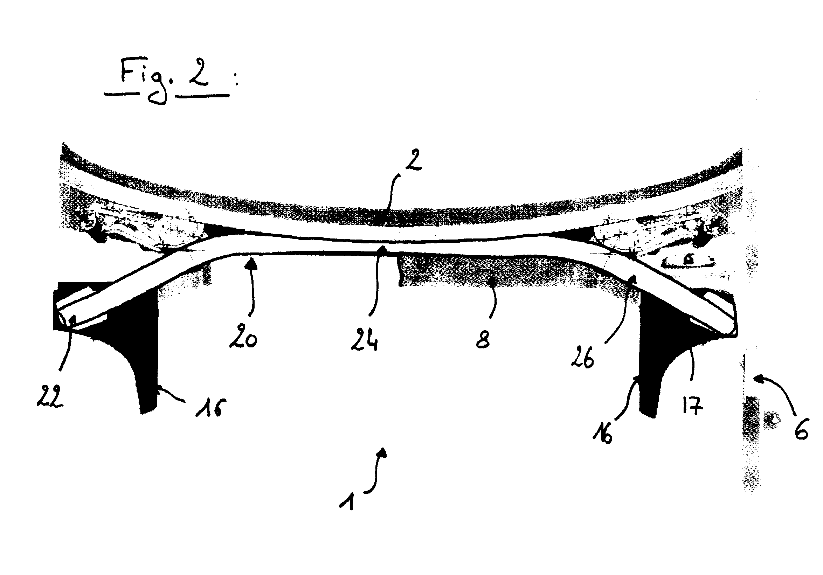

L'arche de maintien 20 peut présenter la forme d'un tube profilé, encastré sur chaque coupelle 16 à ses extrémités 22. En son centre 24, l'arche est solidarisée avec la structure sous baie 2. et par exemple soudée. L'ensemble structurel qui en résulte, du fait que l'arche 20 ne présente pas seulement une fonction de support mais également une fonction structurelle entre la traverse 2 et les coupelles 16 ou entre la traverse 2 et les longerons 14 par exemple, permet la reprise des efforts de maintien du pare brise 4 sur la structure du véhicule. Selon une forme avantageuse représentée à titre d'exemple aux figures 1 et 2, l'arche 20 présente une forme sensiblement symétrique dans laquelle la partie supérieure centrale 24 s'étend sur une grande largeur de la structure sous baie 2. De chaque côté, cette partie centrale 24 est prolongée par des pieds 26 inclinés qui viennent s'encastrer dans la structure du véhicule. Cette forme de l'arche 20 présente un compromis intéressant entre une liaison forte avec la structure sous baie 2, matérialisée par la grande longueur de la partie centrale 24 de l'arche 20, entre la nécessité de chercher un encastrement, et un passage d'efforts associé, sur des éléments latéraux de structure, comme par exemple les coupelles d'amortisseur 16, et entre une structure résistante de l'arche 20, matérialisée par des angles adoucis entre la partie centrale 24 et les pieds 26.

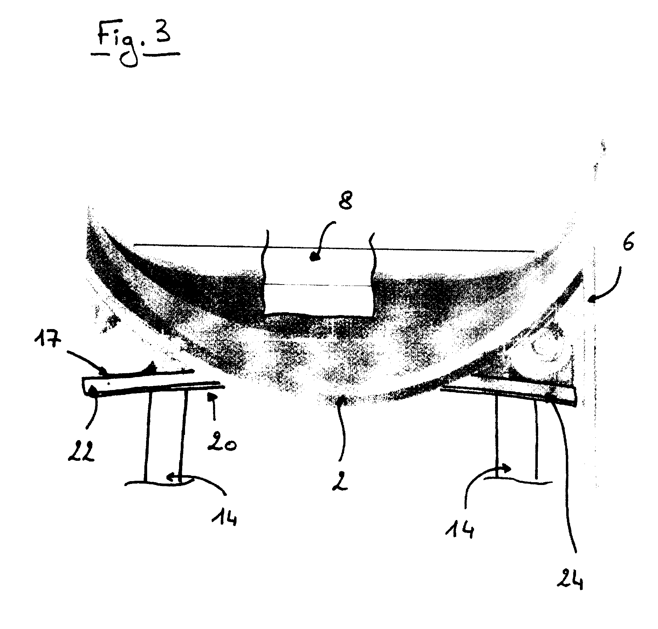

La figure 3 permet également de noter que l'arche 20 peut présenter une forme verticalement inclinée, pour que les extrémités 22 des pieds 26 de l'arche 20 puissent être encastrées sur les faces avant 17 des coupelles d'amortisseurs 16, ces faces 17 étant dégagées dans de nombreux véhicules. Ainsi, l'inclinaison verticale de l'arche 20 pourra être orientée vers l'avant ou vers l'arrière du véhicule afin de faire correspondre les extrémités 22 de l'arche 20 avec une surface d'accueil optimale d'un élément structurel.

Un avantage important de cette arche de maintien 20 est ainsi d'être compatible avec l'architecture d'un véhicule, et en particulier les volumes du groupe moto-propulseur, ou des systèmes d'essuie vitre. En effet, du fait que le pare brise est fortement avancé vers l'avant du véhicule, la structure sous baie avance fortement au dessus du compartiment moteur et la disposition des éléments d'architecture qui y sont situés est à prendre en compte pour assurer un maintien de la structure sous baie. La forme d'arche permet de contourner les volumes d'architecture tout en assurant son rôle d'élément structurel qui est de maintenir la structure sous baie au niveau de sa partie en porte à faux par rapport au tablier du véhicule.

Il sera compris, à titre d'exemple non représenté, qu'une variante peut être obtenue dans le cadre de l'invention en réalisant l'arche en deux parties distinctes et symétriques, chaque partie assurant une liaison structurelle de la traverse sous baie 2 avec un élément latéral de structure, par exemple une coupelle 16.

Selon une autre variante, l'arche de maintien 20 et la structure sous baie 2 peuvent être réalisées en une pièce unique sur laquelle sera alors en appui l'extrémité du pare brise 4. Cette pièce unique est solidarisée à la structure avant 1, et par exemple aux coupelles d'amortisseur 16, de la même façon que dans le cas d'une arche et d'une traverse sous baie distinctes.

L'invention n'est nullement limitée au mode de réalisation décrit et illustré qui n'a été donné qu'à titre d'exemple.

## Revendications

1. Structure avant (1) de véhicule automobile, comportant un élément de support (2) du pare brise (4) qui est placé sous ce pare brise (4) et qui est solidarisé à un élément structurel (8) du tablier (10) du véhicule, **caractérisé en ce que** l'extrémité avant du pare-brise (4) et l'extrémité avant de l'élément de support (2) associé est situé en avant de l'élément structurel de tablier (8) et **en ce qu'**un élément de maintien (20) est placé sous l'extrémité avant de l'élément de support (2), cet élément de maintien (20) étant d'autre part solidarisé à la structure du véhicule.

2. Structure selon la revendication 1, **caractérisée en ce qu'**au moins une partie centrale (24) de l'élément de maintien (20) s'étend sous l'extrémité avant de l'élément de support (2), et **en ce que** la liaison entre cet élément de maintien (20) et la structure avant (1) du véhicule est réalisée transversalement sur au moins un élément latéral structurel (6, 14, 16) du véhicule.

3. Structure selon la revendication 1 ou 2, **caractérisé en ce que** l'élément de maintien (20) présente une forme sensiblement symétrique en arche dans laquelle la partie supérieure centrale (24) s'étend sous une grande largeur de l'élément structurel (2), cette partie centrale (24) étant prolongée de par et d'autre par des pieds (26) présentant une inclinaison vers l'extérieur et le bas du véhicule, ces pieds étant liés chacun à un élément latéral structurel (6, 14, 16) du véhicule.

4. Structure selon l'une des revendications 1 ou 2, **caractérisé en ce que** l'élément de maintien (20) est formé de deux pièces sensiblement symétriques, et **en ce que** chaque pièce de l'élément de maintien (20) est respectivement fixée sous l'extrémité avant de l'élément de support (2), et solidaire d'un élément latéral structurel (6, 14, 16) du véhicule

5. Structure selon l'une des revendications précédentes, **caractérisé en ce que** l'élément de support (2) et l'élément de maintien (20) sont formées d'une unique pièce.

6. Structure selon l'une des revendications précédentes, **caractérisé en ce que** l'élément de maintien (20) est fixé latéralement sur les coupelles d'amortisseur (16) du véhicule.

7. Structure selon l'une des revendications précédentes, **caractérisé en ce que** l'élément de maintien (20) est fixé latéralement sur les longerons (14) de la structure avant (1) du véhicule.

8. Véhicule automobile comprenant une structure avant (1) selon l'une des revendications 1 à 7.
